# EUROPEAN PATENT SPECIFICATION

(11) **EP 2 710 243 B1**
(45) Date of publication and mention of the grant of the patent: **15.04.2015**
(21) Application number: 12716482.0
(22) Date of filing: 22.03.2012
(51) Int. Cl.: F02B 29/00, F02B 47/06, F02B 21/00, F02N 9/04, F01L 1/14

(54) **MULTI-CYLINDER PISTON ENGINE**
MEHRZYLINDRIGE KOLBENBRENNKRAFTMASCHINE
MOTEUR A COMBUSTION INTERNE MULTI-CYLINDRES A PISTONS

(30) Priority: 17.05.2011 FI 20115470
(43) Date of publication of application: 26.03.2014
(73) Proprietor: Wärtsilä Finland Oy, 65380 Vaasa (FI)
(72) Inventor: SUNDSTEN, Magnus, FI-65610 Korsholm (FI)
(74) Representative: Berggren Oy Ab
(86) International application number: PCT/FI2012/050293
(87) International publication number: WO 2012/156573

(56) References cited:
- EP-A1- 0 271 130
- WO-A1-97/41346
- WO-A1-2007/003693
- WO-A1-2010/012864
- WO-A1-2010/049583
- FR-A1- 2 916 238
- US-A1- 2007 005 222

## Description

### Technical field of the invention

The present invention relates to a multi-cylinder piston engine according to the preamble of claim 1.

### Background of the invention

Large internal combustion engines that are used in the propulsion systems of ships or for generating electric power must be able to react quickly to load changes. A problem with turbocharged internal combustion engines is the so called turbo lag. Turbo lag refers to the time that is required after a load increase for reaching a state where the turbocharger works effectively. Especially when the initial load is low, the turbocharger cannot immediately fully respond to the increased combustion air demand, and this leads in reduced rotation speed of the engine when the load suddenly increases. Lack of combustion air can also occur when the engine is operated at part load.

One possible solution for the problem with the turbo lag is to assist the turbocharger with an electric motor. Another solution for reducing the turbo lag and also for increasing the amount of the available combustion air in other operating conditions is to introduce additional pressurized air into the compressor of the turbocharger or directly into the cylinders of the engine. US patent 6571770 B1 discloses a method for operating a diesel engine, in which method additional oxygen-containing gas is supplied to the combustion space through starting-gas valves after closing of the intake valves when the engine is operated under part load or transient load. The above mentioned patent does not disclose how the valves through which the oxygen-containing gas is supplied are controlled.

### Summary of the invention

The object of the present invention is to provide an improved multi-cylinder internal combustion engine that comprises simple and reliable means for controlling the injection of additional oxygen containing gas into the cylinders of the engine. The characterizing features of the engine according to the present invention are given in the characterizing part of claim 1.

A multi-cylinder piston engine according to the present invention comprises means for introducing combustion air into the cylinders of the engine and at least one cam-operated valve lifting device for each cylinder of the engine, the valve lifting device being arranged to open a gas exchange valve. The engine further comprises an arrangement for introducing additional oxygen containing gas into the cylinders of the engine, the arrangement comprising a pressure medium source for supplying the additional oxygen containing gas, an injection valve in connection with each cylinder for introducing the pressure medium into the cylinder, means for connecting the pressure medium source to the injection valves, and a control valve for each cylinder of the engine for controlling the operation of the injection valve. Each control valve is arranged to be operated by a gas exchange cam of the respective cylinder.

The invention has several advantages. The invention enables simple control of the injection of additional oxygen containing gas. Identical cams can be used regardless of the cylinder number of the engine.

According to an embodiment of the invention, the gas exchange cam comprises a portion that is arranged below the base circle of the cam for operating the control valve. When the control valve is operated by a portion of the gas exchange cam that is below the base circle of the cam, a simple and reliable control mechanism can be achieved.

According to an embodiment of the invention, the control valve is arranged to allow pressure medium flow to the injection valve when the valve lifting device is engaged with the portion of the gas exchange cam that is below the base circle of the cam.

According to an embodiment of the invention, the control valve comprises a valve member that is movable by the valve lifting device.

According to an embodiment of the invention, the valve lifting device comprises a plunger pushing the valve member towards the gas exchange cam when the valve lifting device is engaged with the portion of the gas exchange cam that is below the base circle of the cam.

According to an embodiment of the invention, the valve member is pushed towards the valve lifting device by the pressure of the pressure medium.

According to an embodiment of the invention, the injection valve is arranged to be opened by the pressure of the pressure medium.

According to an embodiment of the invention, the gas exchange cam is an exhaust cam. When the exhaust cam is used for controlling the injection valve, the portion of the cam that is below the base circle is far from the lobe of the cam. This ensures smooth operation of the valve lifting device. The invention can be used even in two-stroke engines with cam-operated exhaust valves.

According to an embodiment of the invention, the arrangement comprises a main air assist valve for initiating the injection of the pressure medium into the cylinders of the engine.

According to an embodiment of the invention, each injection valve is arranged in a cylinder head.

According to an embodiment of the invention, the injection valve is arranged to introduce the pressure medium directly into the cylinder.

According to an embodiment of the invention, the injection valve is a starting valve. It is practical to use the same valves that are used for introducing starting air into the cylinders also for introducing the oxygen containing gas into the cylinders.

### Brief description of the drawings

Fig. 1 shows schematically an internal combustion engine with an arrangement for introducing additional oxygen containing gas into the cylinders.
Fig. 2 shows a simplified illustration of a cylinder head of the engine and a valve for introducing additional air into the cylinders.
Figs. 3-6 show an exhaust cam of the engine and a control arrangement for the means for introducing additional air into the cylinders.
Fig. 7 shows the vertical position of the cam followers at different crank angles.

### Detailed description of the invention

Embodiments of the present invention are now described in more detail with reference to the accompanying drawings.

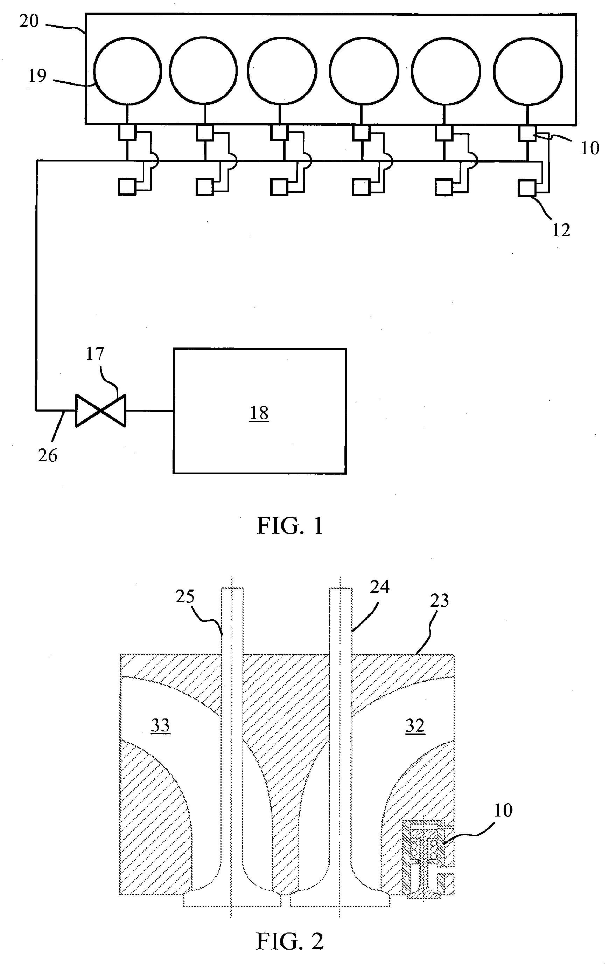

Fig. 1 shows schematically a piston engine 20 with an arrangement for introducing additional oxygen containing gas into the cylinders 19 of the engine 20. The additional oxygen containing gas is pressure medium that is introduced into the cylinders 19 of the engine 20 before ignition but after the normal air intake has ended. In a four-stroke engine this means that the pressure medium is introduced into a cylinder 19 after closing of the intake valves of that cylinder 19. The pressure medium can be for instance pressurized air or pure oxygen. Pressurized air can be produced by a compressor and is therefore suitable for many applications. In this description, the term "additional combustion air" is used for the pressure medium. However, the invention is not limited to the use of air as the pressure medium.

In the example of Fig. 1, the engine 20 comprises six cylinders 19, but the engine 20 could comprise any reasonable number of cylinders 19 arranged for instance inline or in a V-configuration. The engine 20 is a large internal combustion engine, such as those used for producing electricity and/or heat at a power plant or as main or auxiliary engines in ships. The additional combustion air is stored in an air tank 18 that works as a pressure medium source and from which the additional combustion air can be introduced into the cylinders 19 of the engine 20 in an air duct 26. The air tank 18 can be filled by a compressor (not shown). Each cylinder 19 of the engine 20 is provided with an injection valve 10 for introducing additional combustion air into the cylinder 19. The injection valves 10 can be separate valves that are only used for injecting the additional combustion air into the cylinders 19, or they can be the same valves that are used for introducing starting air into the cylinders 19. In figure 2 is shown an injection valve 10 in connection with a cylinder head 23. Each cylinder of the engine 20 is provided with its own cylinder head 23. The cylinder head 23 is provided with an intake duct 32, through which the combustion air is introduced into the cylinder 19, and with an exhaust duct 33 for guiding exhaust gases out of the cylinder 19. One or more intake valves 24 and one or more exhaust valves 25 are arranged to open and close the connection between the cylinder 19 and the intake duct 32 and the exhaust duct 33. The injection valve 10 is arranged to introduce the additional combustion air directly into the cylinder 19.

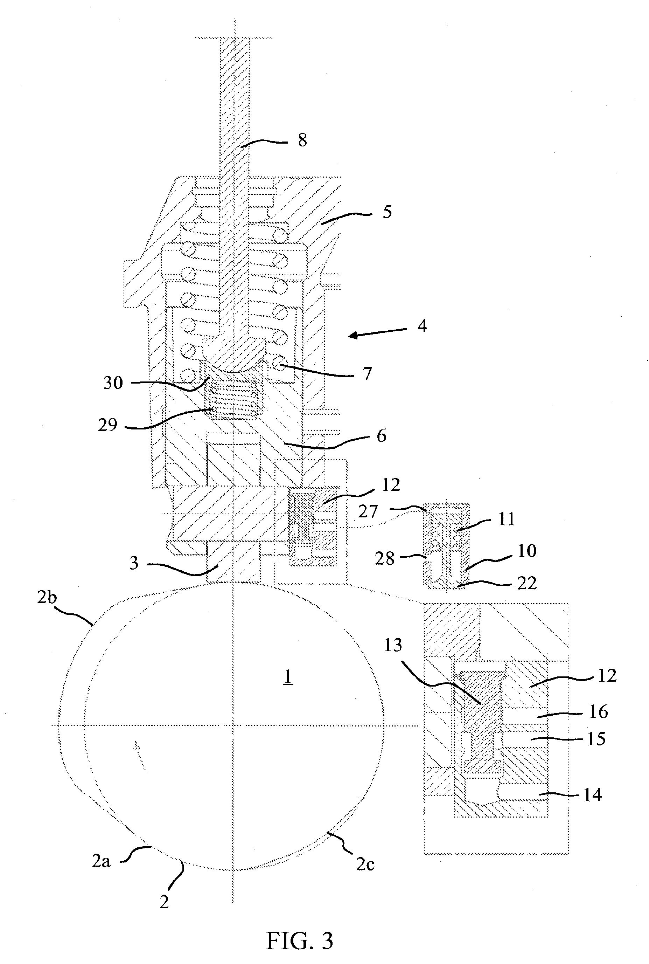

The operation of each injection valve 10 is controlled by a respective control valve 12. Each cylinder 19 of the engine 20 can also be provided with more than one injection valves 10. If each cylinder 19 is provided for instance with two injection valves 10, both valves 10 can be controlled by the same control valve 12. The control valves 12 are connected to the air duct 26. The air duct 26 is provided with a main air assist valve 17 for controlling when the air assisting of the engine 20 is in use. An example of the injection valve 10 and the control valve 12 is shown as a simplified illustration in Figs. 3-6.

The engine 20 comprises a valve lifting device 4 and a gas exchange cam 1 for each cylinder 19 of the engine 20. The gas exchange cam 1 is shown in the figures as being rotated 90 degrees around its vertical axis to better illustrate the cam profile 2. The cam profile 2 of the gas exchange cam 1 comprises a base circle 2a, a lobe 2b and a portion 2c that is arranged below the base circle 2a. The expression "below the base circle" means that the radius of that portion of the cam profile 2 is smaller than the radius of the base circle 2a. The radius of the portion 2c does not need to be constant. In the embodiment shown in Figs. 3-6, the gas exchange cam 1 is an exhaust cam and the valve lift-ing device 4 is arranged to open an exhaust valve 25 of the engine 20. It is beneficial to use the exhaust cams for operating the injection valves 10, since the portion 2c below the base circle can be arranged far from the lobe 2b of the cam 1. This ensures smooth operation of the valve lifting devices 4 and the control valves 12. However, identical cam lifting devices 4 can be used for opening the intake valves 24 of the engine 20. With a different cam profile 2 where the portion 2c below the base circle 2a is in a different position, also an intake cam could be used for operating the control valves 12.

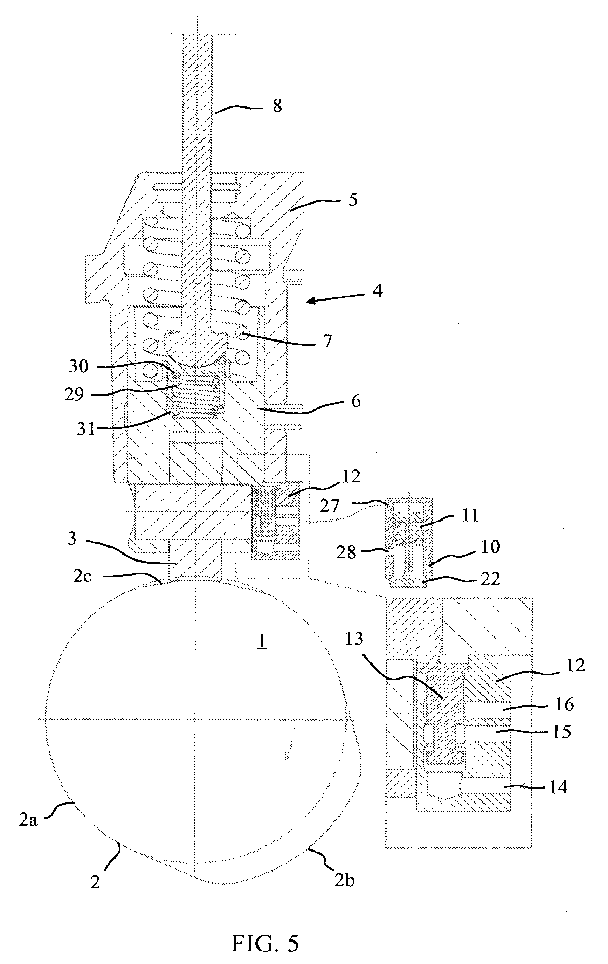

The cam lifting device 4 comprises a body part 5 and a reciprocating plunger 6 that is arranged inside the body part 5. The plunger 6 is arranged to lift a push rod 8. A cam follower 3 is attached to the plunger 6 with a bearing. A coil spring 7 between the body part 5 and the plunger 6 pushes the cam follower 3 against the cam profile 2. There is a piston 30 between the push rod 8 and the plunger 6. A second spring 29 for eliminating clearance between the push rod 8 and the piston 30 is arranged between the piston 30 and the plunger 6. When the cam follower 3 engages with the portion 2c of the cam profile 2 that is below the base circle 2a of the cam profile 2, a gap 31 is formed between the plunger 6 and the piston 30, as shown in figure 5. The second spring 29 keeps the piston 30 against the end of the push rod 8 so that no gap is formed between the push rod 8 and the piston 30 or between the upper end of the push rod 8 and the rocker arm (not shown). This ensures smooth operation of the valve lifting device 4. Instead of the piston 30 and the second spring 29, the cam lifting device 4 can be provided with some other arrangement that ensures that the exhaust valves 25 are not affected by the portion 2c of the cam profile 2 that is below the base circle 2a. For instance, the cam lifting device 4 can be provided with a stopper surface that prevents the push rod from following the plunger 6 when the cam follower enters the portion 2c of the cam profile 2 that is below the base circle 2a.

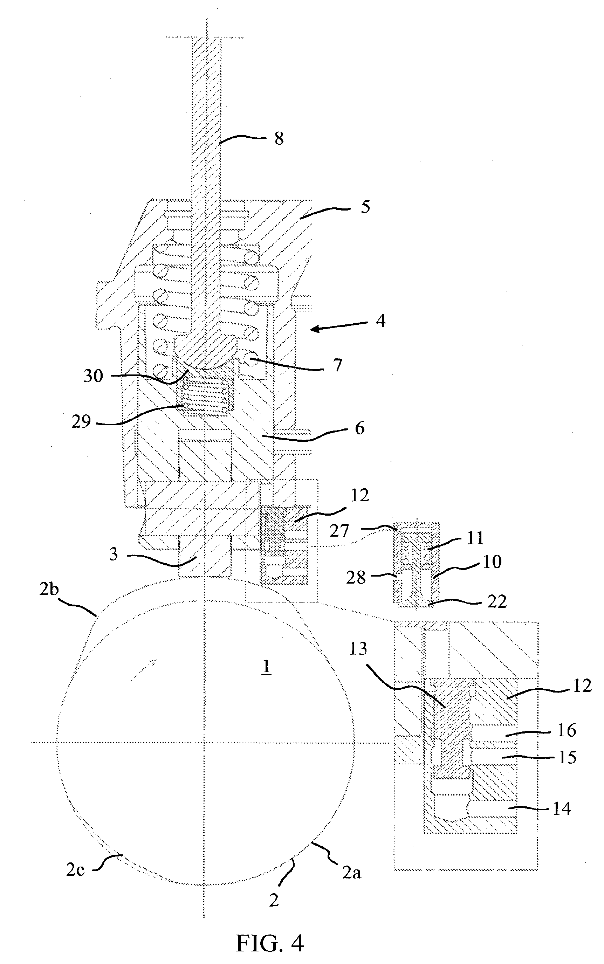

The valve lifting arrangement works in a conventional manner. When the cam follower 3 is on the portion 2c of the cam profile 2 that is below the base circle 2a, the plunger 6 is at its lowest position. When the exhaust cam 1 is rotated, the cam follower 3 becomes eventually engaged with the lobe 2b of the cam profile 2. The plunger 6 and the push rod 8 are moved upwards and the exhaust valve 25 is opened. In figure 4 is shown the situation where the exhaust valve 25 is fully open.

Each cylinder 19 of the engine 20 is provided with an injection valve 10 comprising a valve member 22. The injection valve 10 is kept closed by a spring 11. For controlling the operation of the injection valves 10, each valve lifting device 4 is provided with a control valve 12. When the cam follower 3 is engaged with the portion 2c of the cam profile 2 that is below the base circle 2a, the plunger 6 pushes a valve member 13 inside the control valve 12 downwards, as shown in Fig. 5.

For starting the air assist system of the engine 20, the main air assist valve 17 is opened. This allows the additional combustion air to flow in the air duct 26 to the control valves 12. The pressurized air enters the control valves 12 via inlet channels 14. In those control valves 12 that are in connection with a valve lifting device 4 where the cam follower 3 is on the base circle 2a or the lobe 2b of the exhaust cam 1, the air pressure pushes the valve member 13 inside the control valve 12 upwards into the position shown in Fig. 4. The valve member 13 thus allows the pressurized air to flow out of the control valve 12 through a drain channel 16. The air is released from the drain channel 16 for instance into the engine room. By contrast, in those control valves 12 which are in connection with a valve lifting device 4 where the cam follower 3 is on the portion 2c below the base circle 2a of the exhaust cam 1, the plunger 6 pushes the valve member 13 downwards, as shown in Fig. 5. This closes the connection between the inlet channel 14 and the drain channel 16 and allows the pressurized air to flow through the outlet channel 15 to the respective injection valve 10. The air is introduced through a control air inlet 27 above the valve member 22 of the injection valve 10, where the air pressure pushes the valve member 22 downwards and opens the injection valve 10. The additional combustion air can thus flow in the air duct 26 from the air tank 18 to the injection valve 10 and through an air inlet 28 into a cylinder 19 of the engine 20.

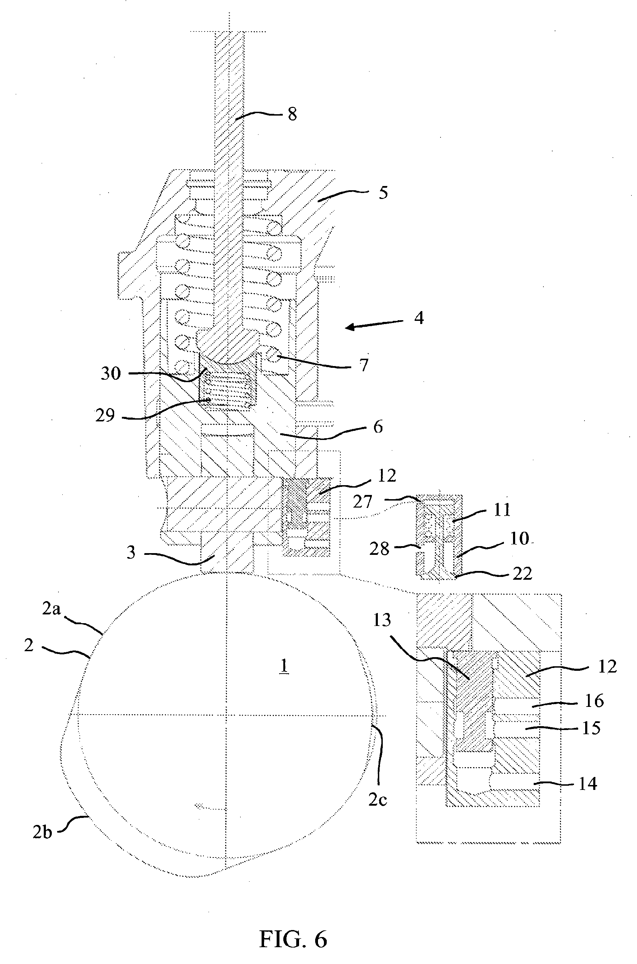

When the camshaft rotates further, the cam follower 3 leaves the portion 2c below the base circle 2a of the cam profile 2 of the exhaust cam 1 and enters again the base circle 2a. The pressure in the inlet channel 14 and the pressure created by the valve member 22 of the injection valve 10 when being pushed upwards by the spring 11 can thus push the valve member 13 upwards inside the control valve 12. Consequently, the connection between the inlet channel 14 and the drain channel 16 of the control valve 12 opens again, as can be seen in Fig. 6, and air injection into the respective cylinder 19 is terminated.

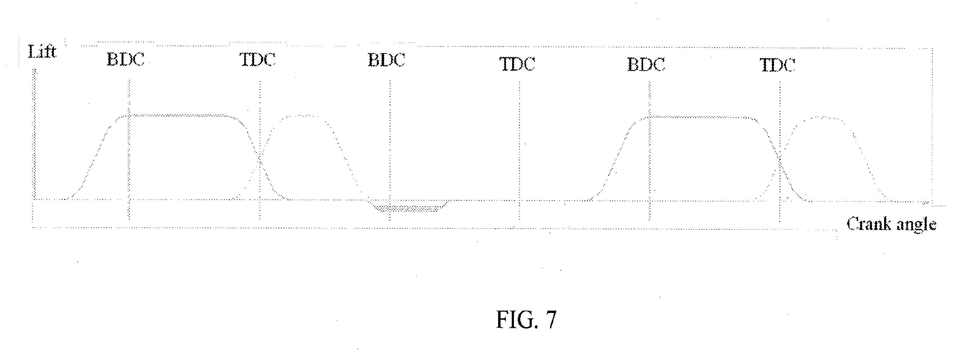

In figure 7 is shown as a graph the positions of the cam followers 3 at different crank angles. The broken line shows the position of the cam follower of the intake valve and the solid line the position of the cam follower of the exhaust valve. Also the plungers 6 follow the same curves. The push rods 8 and the valve lifts also follow the same curves with the exception that because of the piston/spring arrangement 29, 30 of the valve lifting devices 4, the vertical positions of the push rods 8 cannot be negative. The area below the horizontal axis indicates how the cam follower 3 of the exhaust valve lifting device 4 is engaged with the portion 2c below the base circle 2a. The injection of the additional combustion air takes place during this phase, which starts in the embodiments shown in the figures just before bottom dead center (BDC) during the intake stroke and lasts until approximately 90 degrees of crank angle after BDC during the compression stroke.

It will be appreciated by a person skilled in the art that the invention is not limited to the embodiments described above, but may vary within the scope of the appended claims.

## Claims

1. A multi-cylinder piston engine (20) comprising means (32) for introducing combustion air into the cylinders (19) of the engine (20) and at least one cam-operated valve lifting device (4) for each cylinder (19) of the engine (20), the valve lifting device (4) being arranged to open a gas exchange valve (24, 25), the engine (20) further com-prising an arrangement for introducing additional oxygen containing gas into the cylin-ders (19) of the engine (20), the arrangement comprising
- a pressure medium source (18) for supplying the additional oxygen containing gas,
- an injection valve (10) in connection with each cylinder (19) for introducing the pressure medium into the cylinder (19),
- means (26) for connecting the pressure medium source (18) to the injection valves (10), and
- a control valve (12) for each cylinder (19) of the engine (20) for controlling the operation of the injection valve (10),
**characterized in that** each control valve (12) is arranged to be operated by a gas ex-change cam (1) of the respective cylinder (19) and the gas exchange cam (1) comprises a portion (2c) that is arranged below the base circle (2b) of the cam (2) for operating the control valve (12).

2. An engine (20) according to claim 1, **characterized in that** the control valve (12) is arranged to allow pressure medium flow to the injection valve (10) when the valve lifting device (4) is engaged with the portion (2c) of the gas exchange cam (1) that is below the base circle (2b) of the cam (1).

3. An engine (20) according to claim 2, **characterized in that** the control valve (12) comprises a valve member (13) that is movable by the valve lifting device (4).

4. An engine (20) according to claim 3, **characterized in that** the valve lifting device (4) comprises a plunger (6) pushing the valve member (13) towards the gas ex-change cam (1) when the valve lifting device (4) is engaged with the portion (2c) of the gas exchange cam (1) that is below the base circle (2b) of the cam (1).

5. An engine (20) according to claim 3 or 4, **characterized in that** the valve mem-ber (13) is pushed towards the valve lifting device (4) by the pressure of the pressure medium.

6. An engine (20) according to any of the preceding claims, **characterized in that** the injection valve (10) is arranged to be opened by the pressure of the pressure medium.

7. An engine (20) according to any of the preceding claims, **characterized in that** the gas exchange cam (1) is an exhaust cam.

8. An engine (20) according to any of the preceding claims, **characterized in that** the arrangement comprises a main air assist valve (17) for initiating the injection of the pressure medium into the cylinders (19) of the engine (20).

9. An engine (20) according to any of the preceding claims, **characterized in that** each injection valve (10) is arranged in a cylinder head (23).

10. An engine (20) according to any of the preceding claims, **characterized in that** the injection valve (10) is arranged to introduce the pressure medium directly into the cylinder (19).

11. An engine (20) according to any of the preceding claims, **characterized in that** the injection valve (10) is a starting valve.

## Patentansprüche

1. Mehrzylinder-Kolbenkraftmaschine (20), die Mittel (32) zum Einleiten von Verbrennungsluft in die Zylinder (19) der Kraftmaschine (20) und wenigstens eine nockenbetätigte Ventilhubeinrichtung (4) für jeden Zylinder (19) der Kraftmaschine (20) umfasst, wobei die Ventilhubeinrichtung (4) dafür angeordnet ist, ein Ladungswechselventil (24, 25) zu öffnen, wobei die Kraftmaschine (20) ferner eine Anordnung zum Einleiten von zusätzlichem sauerstoffhaltigem Gas in die Zylinder (19) der Kraftmaschine (20) umfasst, wobei die Anordnung Folgendes umfasst:
- eine Druckmedienquelle (18) zum Zuführen des zusätzlichen sauerstoffhaltigen Gases,
- ein Einspritzventil (10) in Verbindung mit jedem Zylinder (19) zum Einleiten des Druckmediums in den Zylinder (19),
- Mittel (26) zum Verbinden der Druckmedienquelle (18) mit den Einspritzventilen (10) und
- ein Steuerventil (12) für jeden Zylinder (19) der Kraftmaschine (20) zum Steuern des Betriebs des Einspritzventils (10),
**dadurch gekennzeichnet, dass** jedes Steuerventil (12) dafür angeordnet ist, durch einen Ladungswechselnocken (1) des jeweiligen Zylinders (19) betätigt zu werden, und der Ladungswechselnocken (1) einen Abschnitt (2c) umfasst, der unterhalb des Grundkreises (2b) des Nockens (1) angeordnet ist, um das Steuerventil (12) zu betätigen.

2. Kraftmaschine (20) nach Anspruch 1, **dadurch gekennzeichnet, dass** das Steuerventil (12) dafür angeordnet ist, einen Druckmedienstrom zu dem Einspritzventil (10) zu ermöglichen, wenn die Ventilhubeinrichtung (4) mit demjenigen Abschnitt (2c) des Ladungswechselnockens (1), der sich unterhalb des Grundkreises (2b) des Nockens (1) befindet, in Eingriff gebracht ist.

3. Kraftmaschine (20) nach Anspruch 2, **dadurch gekennzeichnet, dass** das Steuerventil (12) ein Ventilelement (13) umfasst, das durch die Ventilhubeinrichtung (4) bewegt werden kann.

4. Kraftmaschine (20) nach Anspruch 3, **dadurch gekennzeichnet, dass** die Ventilhubeinrichtung (4) einen Stößel (6) umfasst, der das Ventilelement (13) zu dem Ladungswechselnocken (1) hin schiebt, wenn die Ventilhubeinrichtung (4) mit demjenigen Abschnitt (2c) des Ladungswechselnockens (1), der sich unterhalb des Grundkreises (2b) des Nockens (1) befindet, in Eingriff gebracht ist.

5. Kraftmaschine (20) nach Anspruch 3 oder 4, **dadurch gekennzeichnet, dass** das Ventilelement (13) durch den Druck des Druckmediums zu der Ventilhubeinrichtung (4) hin geschoben wird.

6. Kraftmaschine (20) nach einem der vorhergehenden Ansprüche, **dadurch gekennzeichnet, dass** das Einspritzventil (10) dafür angeordnet ist, durch den Druck des Druckmediums geöffnet zu werden.

7. Kraftmaschine (20) nach einem der vorhergehenden Ansprüche, **dadurch gekennzeichnet, dass** der Ladungswechselnocken (1) ein Auslassnocken ist.

8. Kraftmaschine (20) nach einem der vorhergehenden Ansprüche, **dadurch gekennzeichnet, dass** die Anordnung ein Haupt-Luftunterstützungsventil (17) zum Einleiten des Einspritzens des Druckmediums in die Zylinder (19) der Kraftmaschine (20) umfasst.

9. Kraftmaschine (20) nach einem der vorhergehenden Ansprüche, **dadurch gekennzeichnet, dass** jedes Einspritzventil (10) in einem Zylinderkopf (23) angeordnet ist.

10. Kraftmaschine (20) nach einem der vorhergehenden Ansprüche, **dadurch gekennzeichnet, dass** das Einspritzventil (10) dafür angeordnet ist, das Druckmedium unmittelbar in den Zylinder (19) einzuleiten.

11. Kraftmaschine (20) nach einem der vorhergehenden Ansprüche, **dadurch gekennzeichnet, dass** das Einspritzventil (10) ein Anlassventil ist.

## Revendications

1. Moteur à combustion interne multi-cylindres à pistons (20) comprenant un moyen (32) pour introduire de l'air de combustion dans les cylindres (19) du moteur (20) et au moins un dispositif de levée de soupape actionné par came (4) pour chaque cylindre (19) du moteur (20), le dispositif de levée de soupape (4) étant agencé pour ouvrir une soupape d'échange de gaz (24, 25), le moteur (20) comprenant en plus un montage pour introduire un gaz supplémentaire contenant de l'oxygène dans les cylindres (19) du moteur (20), ledit montage comprenant
- une source de milieu de pression (18) pour fournir le gaz supplémentaire contenant de l'oxygène,
- une soupape d'injection (10) en rapport avec chaque cylindre (19) pour introduire le milieu de pression dans le cylindre (19),
- un moyen (26) pour raccorder la source de milieu de pression (18) aux soupapes d'injection (10), et
- une soupape régulatrice (12) pour chaque cylindre (19) du moteur (20) pour réguler le fonctionnement de la soupape d'injection (10),
**caractérisé en ce que** chaque soupape régulatrice (12) est disposée pour être actionnée par une came d'échange de gaz (1) du cylindre respectif (19) et la came d'échange de gaz (1) comprend une partie (2c) qui est disposée sous le cercle de base (2b) de la came (2) pour actionner la soupape régulatrice (12).

2. Moteur (20) selon la revendication 1, **caractérisé en ce que** la soupape régulatrice (12) est disposée pour permettre un écoulement du milieu de pression vers la soupape d'injection (10) lorsque le dispositif de levée de soupape (4) est engagé avec la partie (2c) de la came d'échange de gaz (1) qui est sous le cercle de base (2b) de la came (1).

3. Moteur (20) selon la revendication 2, **caractérisé en ce que** la soupape régulatrice (12) comprend un élément de soupape (13) qui peut être déplacé par le dispositif de levée de soupape (4).

4. Moteur (20) selon la revendication 3, **caractérisé en ce que** le dispositif de levée de soupape (4) comprend un piston plongeur (6) poussant l'élément de soupape (13) vers la came d'échange de gaz (1) lorsque le dispositif de levée de soupape (4) est engagé avec la partie (2c) de la came d'échange de gaz (1) qui est sous le cercle de base (2b) de la came (1).

5. Moteur (20) selon la revendication 3 ou 4, **caractérisé en ce que** l'élément de soupape (13) est poussé vers le dispositif de levée de soupape (4) par la pression du milieu de pression.

6. Moteur (20) selon l'une quelconque des revendications précédentes, **caractérisé en ce que** la soupape d'injection (10) est disposée pour être ouverte par la pression du milieu de pression.

7. Moteur (20) selon l'une quelconque des revendications précédentes, **caractérisé en ce que** la came d'échange de gaz (1) est une came d'échappement.

8. Moteur (20) selon l'une quelconque des revendications précédentes, **caractérisé en ce que** le montage comprend une soupape d'assistance d'air principale (17) pour déclencher l'injection du milieu de pression dans les cylindres (19) du moteur (20).

9. Moteur (20) selon l'une quelconque des revendications précédentes, **caractérisé en ce que** chaque soupape d'injection (10) est disposée dans une culasse (23).

10. Moteur (20) selon l'une quelconque des revendications précédentes, **caractérisé en ce que** la soupape d'injection (10) est disposée pour introduire le milieu de pression directement dans le cylindre (19).

11. Moteur (20) selon l'une quelconque des revendications précédentes, **caractérisé en ce que** la soupape d'injection (10) est une soupape de démarrage.
